(19) Europäisches Patentamt
European Patent Office
Office européen des brevets

(11) **EP 2 258 615 B1**

(12) **FASCICULE DE BREVET EUROPEEN**

(45) Date de publication et mention de la délivrance du brevet:
**10.07.2013 Bulletin 2013/28**

(51) Int Cl.:
**B64C 27/28** *(2006.01)*      **B64D 43/00** *(2006.01)*
**B64C 27/04** *(2006.01)*      **B64C 27/26** *(2006.01)*

(21) Numéro de dépôt: **10004644.0**

(22) Date de dépôt: **03.05.2010**

(54) **Dispositif d'aide au pilotage d'un hélicoptère hybride, hélicoptère hybride muni d'un tel dispositif et procédé mis en oeuvre par ledit dispositif**

Hilfsvorrichtung zum Steuern eines hybriden Hubschraubers, hybrider Hubschrauber mit einer solchen Vorrichtung, sowie Verfahren zum Betrieb einer solchen Vorrichtung

Flight control assistance device for a hybrid helicopter, hybrid helicopter comprising said device and operating method for said device

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **04.06.2009 FR 0902683**

(43) Date de publication de la demande:
**08.12.2010 Bulletin 2010/49**

(73) Titulaire: **EUROCOPTER**
**13725 Marignane Cédex (FR)**

(72) Inventeur: **Eglin, Paul**
**13100 Aix en Provence (FR)**

(74) Mandataire: **Pouillot, Laurent Pierre Paul**
**GPI & Associés**
**1330 Rue Guillibert de la Lauzière**
**EuroParc de Pichauny, Bât B2**
**13856 Aix-en-Provence Cedex 3 (FR)**

(56) Documents cités:
**WO-A1-96/26472      FR-A1- 2 916 418**
**US-A- 4 514 142      US-B1- 6 195 598**

**Description**

La présente invention concerne un dispositif d'aide au pilotage d'un hélicoptère hybride, un hélicoptère hybride muni d'un tel dispositif et un procédé mis en oeuvre par ledit dispositif.

Plus particulièrement, l'invention se rapporte donc à un hélicoptère hybride relatif à un concept avancé d'aéronef à décollage et à atterrissage verticaux, désigné « VTOL Aircraft » ou « Vertical Take-Off and Landing Aircraft » en langue Anglaise.

Ce concept avancé d'hélicoptère hybride, décrit dans le document FR2916418 allie à un coût raisonnable l'efficacité du vol vertical de l'hélicoptère conventionnel aux performances à grande vitesse de déplacement permises par l'utilisation d'hélices propulsives et l'installation de turbomoteurs modernes.

Ainsi, un hélicoptère hybride est ni un hélicoptère, ni un autogire, ni un girodyne. De même, l'hélicoptère hybride n'est ni un combiné ni un convertible.

En effet, un hélicoptère hybride comprend un fuselage, une voilure tournante munie d'un rotor principal destiné à entraîner en rotation des pales grâce à au moins un turbomoteur.

De plus, l'hélicoptère hybride est pourvu d'une aile composée de deux demi-ailes, deux hélices propulsives étant placées de part et d'autre du fuselage, sur les demi-ailes.

En outre, l'hélicoptère hybride est équipé d'une chaîne cinématique intégrée, qui, outre le ou les turbomoteurs, le rotor principal et les deux hélices, comprend un système mécanique d'interconnexion entre ces éléments.

Avec cette configuration, les vitesses de rotation des sorties du ou des turbomoteurs, des hélices, du rotor principal et du système mécanique d'interconnexion sont proportionnelles entre elles, le rapport de proportionnalité étant constant quelle que soit la configuration de vol de l'hélicoptère hybride en conditions normales de fonctionnement de la chaîne cinématique intégrée.

Par conséquent et de façon avantageuse, le rotor principal demeure toujours entraîné en rotation par le (ou les) turbomoteur(s), et développe toujours une portance quelle que soit la configuration de l'hélicoptère hybride, aussi bien en vol d'avancement qu'en vol stationnaire.

Plus précisément, le rotor principal est destiné à assurer la totalité de la portance de l'hélicoptère hybride pendant les phases de décollage, d'atterrissage et de vol vertical puis partiellement pendant le vol de croisière, l'aile contribuant alors pour partie à supporter ledit hélicoptère hybride.

Ainsi, le rotor principal exerce la plus grande part de la sustentation de l'hélicoptère hybride en vol de croisière avec éventuellement une faible contribution aux forces propulsives ou traction et toujours avec une traînée minimale.

A l'instar d'un hélicoptère, le pilote dispose alors d'un premier et d'un deuxième moyens de commande pour contrôler respectivement le pas collectif et le pas cyclique des pales du rotor principal.

Par ailleurs, en modifiant collectivement et d'une même quantité le pas des pales des hélices de l'hélicoptère hybride, il est en outre possible de contrôler la poussée générée par ces hélices.

Ainsi, le pilote dispose d'au moins un moyen de commande de la poussée apte à modifier collectivement et d'une même quantité le pas des pales des hélices.

A contrario, les fonctions anticouple et de contrôle de direction sont réalisées par l'utilisation d'une poussée différentielle exercée par les hélices, par exemple via la mise en oeuvre d'un palonnier par le pilote.

Par suite, le moyen de commande de la poussée permet de définir le pas moyen des pales des première et deuxième hélices, ce pas moyen correspondant à la demi-somme des premier et deuxième pas des pales des première et deuxième hélices.

A contrario, le palonnier permet d'éloigner du pas moyen le pas des pales des première et deuxième hélices de manière différentielle, le pas des pales d'une hélice étant augmenté d'une valeur alors que le pas des pales de l'autre hélice est diminué de ladite valeur.

On comprend qu'il peut alors être délicat de piloter l'hélicoptère hybride dans la mesure où de multiples commandes sont à manipuler. De plus, il convient d'éviter de donner des ordres aux première et deuxième hélices susceptibles de dégrader le comportement de l'hélicoptère, par exemple en générant une poussée résultante des hélices dirigées vers l'arrière de l'hélicoptère hybride.

Le document US5050081 décrit un indicateur présentant la poussée générée par un moteur d'aéronef en pourcentage de la poussée maximale disponible pour ce moteur.

De même, le document EP1471334 présente un indicateur gradué en pourcentage de la poussée maximale d'un moteur et qui affiche la poussée effective ainsi que la poussée commandée.

Bien qu'efficace, l'enseignement de ces documents n'est pas transposable à un hélicoptère hybride. En effet, sur un hélicoptère hybride, la poussée est générée par les première et deuxième hélices ainsi que par le rotor principal, et non pas par un moteur. Le domaine technique de l'invention est donc éloigné de celui des documents précités

Le brevet FR2756256 présente un indicateur affichant la marge de puissance disponible pour un turbomoteur d'hélicoptère sur un indicateur gradué en degrés de pas collectif des pales du rotor principal.

Néanmoins, cet enseignement ne permet pas de réaliser un dispositif d'aide au pilotage d'un hélicoptère hybride possédant non seulement un rotor principal mais aussi une première et une deuxième hélices liées au rotor principal par un système d'interconnexion. En effet, la spécificité d'un hélicoptère hybride implique qu'un ordre donné au rotor principal à des conséquences sur les première et deuxième hélices, et inversement, ce qui a pour conséquence que l'état de la technique connue ne peut lui être appliqué.

Le document US 4514142 présente un aéronef muni d'une installation motrice, d'un rotor principal ainsi que d'un propulseur arrière agencé à l'arrière d'une poutre de queue.

Selon ce document, on mesure en temps réel le couple total et disponible de l'installation motrice, et on lui soustrait le couple généré par le rotor principal. Plus précisément, on génère un premier signal, sous la forme d'une tension, que l'on envoie à un moyen de détection du couple du rotor principal afin que ce moyen de détection génère un deuxième signal.

Les premier et deuxième signaux sont alors éventuellement transmis à un afficheur qui affiche l'évolution du couple disponible restant pour le propulseur arrière en fonction du temps. On présente alors l'écart entre le couple moteur disponible moins le couple rotor.

Bien qu'efficace, il semble difficile d'utiliser pratiquement un tel dispositif pout faciliter le pilotage de l'aéronef.

La présente invention a alors pour objet de proposer un dispositif d'aide au pilotage permettant de faciliter le pilotage d'un hélicoptère hybride afin d'optimiser les performances de l'hélicoptère hybride en garantissant sa sécurité.

Selon l'invention, un dispositif d'aide au pilotage d'un hélicoptère hybride muni d'une voilure tournante, d'une première et d'une deuxième demi-ailes pourvues respectivement d'une première et d'une deuxième hélices, et d'une installation motrice ayant au moins un turbomoteur entraînant en permanence en rotation la voilure tournante et les première et deuxième hélices en engrenant un système mécanique d'interconnexion est remarquable en ce que, ce dispositif d'aide au pilotage étant apte à recevoir une première et une deuxième informations de puissance en provenance d'un organe de régulation de l'installation motrice, les première et deuxième informations de puissance étant respectivement relatives à une puissance maximale apte à être délivrée par ladite installation motrice et à une puissance actuelle délivrée par cette installation motrice, ledit dispositif d'aide au pilotage comporte :

- un capteur de pas moyen apte à mesurer un pas moyen actuel des pales des première et deuxième hélices, en temps réel,

- un capteur de vitesse air apte à mesurer la vitesse air vraie de l'hélicoptère hybride, en temps réel,

- un capteur de vitesse de rotation apte à mesurer la vitesse de rotation des hélices de l'hélicoptère hybride, en temps réel,

- un capteur de densité apte à mesurer la densité de l'air, en temps réel,

- un moyen de calcul muni d'une mémoire comportant une première équation déterminant un gradient de puissance en fonction du pas des première et deuxième hélices, le moyen de calcul étant relié au capteur de pas moyen, au capteur de vitesse air vraie, au capteur de vitesse de rotation des hélices, au capteur de densité de l'air et étant apte à recevoir les première et deuxième informations de puissance pour déterminer un pas moyen maximal applicable aux première et deuxième hélices sans excéder la puissance disponible pour les hélices, le moyen de calcul déterminant le pas moyen maximal en fonction du pas moyen actuel, des première et deuxième informations de puissance et dudit gradient de puissance en fonction du pas,

- un moyen d'affichage apte à présenter sur un écran de visualisation ledit pas moyen maximal.

Il est à noter que l'on entend classiquement par « pas moyen » la demi-somme des pas des pales des première et deuxième hélices.

De plus, l'organe de régulation de l'installation motrice peut être un organe de régulation électronique, dénommé FADEC (« *Full Autorithy Digital Engine Control* » selon l'appellation anglaise) par l'homme du métier. Cet organe de régulation est apte à délivrer les première et deuxième informations de puissance respectivement relatives à une puissance maximale apte à être délivrée par l'installation motrice et à une puissance actuelle délivrée par cette installation motrice. On se rapportera donc à la documentation existante pour obtenir plus de détails sur l'organe de régulation.

Par ailleurs, il est à noter que l'on entend par voilure tournante, un système notamment de sustentation comportant au moins un rotor principal. Plus précisément, la voilure tournante peut comporter un rotor principal ou encore deux rotors principaux, éventuellement contrarotatifs.

Dès lors, on comprend que l'expression « entrainer en rotation la voilure tournante » revient à indiquer que l'on entraine en rotation l'ensemble des rotors principaux de cette voilure tournante. De même, la vitesse de rotation de la voilure tournante est relative à la vitesse de rotation du ou des rotors principaux de cette voilure tournante, étant entendu que deux rotors principaux distincts d'une voilure tournante tournent à la même vitesse de rotation.

En outre, il parait évident que chaque turbomoteur entraîne en permanence en rotation la voilure tournante, et donc le ou les rotors principaux de cette voilure tournante, ainsi que les première et deuxième hélices dans des conditions normales de fonctionnement. En effet, un turbomoteur arrêté, volontairement ou suite à une panne, ne pourra plus être en mesure d'entrainer en rotation la voilure tournante et les première et deuxième hélices. Autrement dit, deux configurations sont possibles :

- l'installation motrice entraine la voilure tournante ainsi que les première et deuxième hélices en conditions normales,
- l'installation motrice entraine ni la voilure tournante ni les première et deuxième hélices en cas de panne de cette installation motrice, ou en cas de pannes simulées, l'installation motrice étant éventuellement pourvue d'un moyen de déconnexion pour ne pas ralentir le ou les rotors principaux de la voilure tournante.

Cette caractéristique revient à signaler que l'hélicoptère hybride n'est par exemple pas un autogire, la voilure tournante étant en permanence entrainée en vol par l'installation motrice dans des conditions de vol normales.

Dans ce contexte, l'invention présente sous forme d'écart de pas moyen l'écart entre la puissance disponible et la puissance consommée par l'installation motrice. Contrairement aux solutions connues, l'invention détermine étonnamment le pas moyen maximal en fonction du pas actuel, d'une première et d'une deuxième informations de puissance et d'un gradient de puissance en fonction du pas des première et deuxième hélices

Ainsi, l'invention permet d'éviter une chute non désirée de la vitesse de rotation de la voilure tournante, la baisse de cette vitesse de rotation du rotor principal pouvant entrainer un accident.

En effet, une modification du pas moyen des pales des première et deuxième hélices requiert une modification de la puissance actuelle délivrée par le ou les turbomoteurs.

Plus précisément, chaque hélice et la voilure tournante tournant selon un rapport constant, lorsque l'on augmente le pas moyen des pales des première et deuxième hélices, le ou les turbomoteurs sont contraints de tourner plus vite pour accroître la puissance motrice afin que la vitesse de rotation des hélices demeure constante.

Par suite, la marge de puissance disponible, notamment pour la voilure tournante, se réduit.

A l'extrême, si le pilote augmente trop le pas moyen des pales des première et deuxième hélices, à savoir au-delà du pas moyen maximal déterminé par le moyen de calcul, l'installation motrice n'est plus à même de fournir suffisamment de puissance, cette installation motrice ne pouvant de fait plus assurer le maintien de la vitesse de rotation de la voilure tournante. L'hélicoptère hybride va alors perdre indûment de la hauteur par rapport au sol.

Ainsi, en déterminant et en affichant le pas moyen maximal des pales des première et deuxième hélices à respecter, on aide considérablement le pilote.

Par ailleurs, le dispositif d'aide au pilotage peut comporter une ou plusieurs des caractéristiques additionnelles qui suivent.

Par exemple, le moyen de calcul commande le moyen d'affichage pour présenter sur un écran de visualisation un premier symbole représentant ce pas moyen maximal des pales des première et deuxième hélices.

De plus, la première information de puissance contenant une première puissance maximale apte à être délivrée par ladite installation motrice à un premier régime de fonctionnement, mettant par exemple en oeuvre la puissance maximale en continu PMC du ou des turbomoteurs, et une deuxième puissance maximale apte à être délivrée par ladite installation motrice à un deuxième régime de fonctionnement, mettant par exemple en oeuvre la puissance maximale au décollage PMD du ou des turbomoteurs, le moyen de calcul détermine un premier pas moyen maximal pour le premier régime de fonctionnement et un deuxième pas moyen maximal pour le deuxième régime de fonctionnement.

Ainsi, le moyen de calcul commande le moyen d'affichage pour présenter sur l'écran de visualisation un premier symbole primaire représentant le premier pas moyen maximal et un premier symbole secondaire représentant le deuxième pas moyen maximal.

Le dispositif d'aide au pilotage comporte un capteur de vitesse air apte à mesurer et à transmettre une première information de vitesse relative à la vitesse air vraie de l'hélicoptère hybride au moyen de calcul, un capteur de vitesse de rotation apte à mesurer et à transmettre une deuxième information de vitesse relative à la vitesse de rotation des hélices au moyen de calcul ainsi qu'un capteur de densité apte à mesurer et à transmettre la densité de l'air ambiant.

Il est à noter que l'on entend classiquement par « vitesse air vraie » la vitesse du centre de gravité de l'hélicoptère hybride par rapport à l'air extérieur, cette vitesse air vraie étant par exemple mesurée à l'aide d'un anémomètre apte à prendre en considération la température et la pression extérieures.

Dés lors, le moyen de calcul détermine avantageusement un pas moyen en autorotation générant une poussée nulle des première et deuxième hélices en fonction des première et deuxième informations de vitesse.

L'invention propose ainsi un dispositif déterminant et affichant la valeur d'un pas moyen en autorotation des pales des première et deuxième hélices dépendant de la vitesse air vraie de l'hélicoptère hybride et de la vitesse de rotation des hélices.

En autorotation, le pilote de l'hélicoptère hybride règle alors le pas moyen actuel des pales des première et deuxième hélices, à savoir le pas moyen auquel se trouvent les pales des première et deuxième hélices à chaque instant, à l'aide de moyens appropriés afin que ce pas moyen actuel soit égal au pas moyen en autorotation des pales des première et deuxième hélices.

Dés lors, la puissance dissipée par les première et deuxième hélices est minimale, ce qui améliore les capacités de l'aéronef à l'autorotation.

Eventuellement, le moyen de calcul commande le moyen d'affichage pour présenter sur l'écran de visualisation un deuxième symbole représentant le pas moyen en autorotation.

Avantageusement, le moyen de calcul commande le moyen d'affichage pour présenter sur un écran de visualisation un premier symbole représentant le pas moyen en autorotation des pales des première et deuxième hélices si :

- le pas moyen en autorotation est supérieur à 5 degrés, et si

- la vitesse air vraie mesurée par le capteur de vitesse air est supérieure à 20 mètres par seconde.

Ainsi, le moyen de calcul ordonne l'affichage, sur l'écran de visualisation, d'un deuxième symbole représentant le pas moyen en autorotation des pales des première et deuxième hélices si les conditions précitées sont remplies.

Par ailleurs, le dispositif d'aide au pilotage étant apte à être relié à un dispositif de pilotage automatique de l'hélicoptère hybride, le moyen de calcul est apte à commander au moyen d'affichage de présenter, et donc d'afficher, un troisième symbole sur l'écran de visualisation, le troisième symbole étant relatif à une consigne de pas moyen donnée par le dispositif de pilotage automatique.

En effet, lorsque le vol est contrôlé par un dispositif de pilotage automatique, ce dispositif de pilotage automatique établit une consigne de pas moyen des première et deuxième hélices pour réguler l'installation motrice.

La consigne élaborée par le dispositif de pilotage automatique est alors affichée par le dispositif d'aide au pilotage.

En comparant la consigne avec le pas moyen réel des première et deuxième hélices, le pilote peut se faire une opinion sur le bon fonctionnement du dispositif de pilotage automatique, le pas moyen réel devant normalement être égal à la consigne.

En outre, pour faciliter le vol stationnaire, le moyen de calcul comportant une mémoire stockant notamment une plage optimisée du pas moyen lors d'un vol en stationnaire, le moyen de calcul commande au moyen d'affichage de présenter, et donc d'afficher, un quatrième symbole sur l'écran de visualisation, le quatrième symbole représentant la plage optimisée.

En effet, réaliser un vol stationnaire sur un hélicoptère hybride n'est pas aussi simple que sur un hélicoptère classique.

Par suite, deux procédures limites sont envisageables.

La première procédure consiste à piloter l'hélicoptère hybride afin qu'il présente une assiette et une poussée résultante des première et deuxième hélices nulles. Les première et deuxième hélices exercent alors chacune une poussée, dirigée selon des sens opposés, une hélice exerçant une poussée d'une valeur opposée à celle de l'autre hélice pour compenser le couple exercé par la voilure tournante, excepté le cas éventuel où ladite voilure tournante comprend deux rotors principaux contrarotatifs. De la sorte, les poussées des première et deuxième hélices contrecarrent ledit couple et la poussée résultante des première et deuxième hélices est nulle.

La deuxième procédure consiste notamment à utiliser le moyen de commande en lacet afin qu'une hélice exerce une poussée non nulle vers l'avant et que l'autre hélice exerce une poussée nulle, les première et deuxième hélices exerçant alors une poussée résultante non nulle vers l'avant de l'aéronef.

Néanmoins, la poussée résultante de l'ensemble des première et deuxième hélices tendant à faire avancer l'hélicoptère hybride, il convient de faire cabrer cet hélicoptère hybride pour rester en stationnaire au lieu d'avancer.

Afin d'optimiser les procédures, le moyen de calcul possède dans sa mémoire une plage optimisée déterminée permettant d'une part de minimiser la puissance nécessaire pour que l'hélicoptère hybride reste en stationnaire, et d'autre part d'éviter de cabrer fortement l'hélicoptère hybride.

Plus précisément, la plage optimisée s'étend d'un premier pas moyen en stationnaire, de l'ordre de -5°, à un deuxième pas moyen en stationnaire, de l'ordre de +5°.

Avantageusement, le premier pas moyen en stationnaire permet une poussée conjointe des hélices contrecarrant le couple généré par la voilure tournante sous les conditions mentionnées précédemment, la poussée résultante des première et deuxième hélices étant nulle. Le premier pas est alors égal au pas moyen minimal en vol stationnaire.

Autrement dit, une hélice exerce une poussée dirigée selon un sens et égale à une première valeur, alors que l'autre hélice exerce une poussée dirigée selon un deuxième sens opposé au premier sens et de même valeur.

A contrario, le deuxième pas moyen en stationnaire permet une poussée contrecarrant ledit couple, la poussée résultante des première et deuxième hélices étant maximale en vol stationnaire.

Désormais, le deuxième pas en stationnaire génère une poussée nulle d'une hélice, et une poussée de l'autre hélice contrecarrant le couple généré par la voiture tournante.

Par ailleurs, le moyen de calcul étant apte à ordonner l'affichage d'au moins un symbole sur ledit écran de visualisation, chaque symbole est éventuellement positionné sur un secteur angulaire gradué en degrés de pas moyen des pales des première et deuxième hélices.

Le dispositif d'aide au pilotage comportant des moyens de mesure reliés audit moyen de calcul pour lui indiquer le pas moyen actuel des pales des première et deuxième hélices, le moyen de calcul ordonne l'affichage dudit pas moyen actuel, le moyen d'affichage présentant le pas moyen actuel via une aiguille apte à balayer le secteur angulaire ou via ladite aiguille et un affichage numérique.

La présente invention a de plus pour objet un hélicoptère hybride muni d'une voiture tournante, d'une première et d'une deuxième demi-ailes pourvues respectivement d'une première et d'une deuxième hélices, et d'une installation motrice comportant au moins un turbomoteur entraînant en permanence en rotation ladite voiture tournante et les première et deuxième hélices en engrenant un système mécanique d'interconnexion.

Cet hélicoptère hybride est alors remarquable en ce qu'il comporte ledit dispositif d'aide au pilotage selon l'invention décrit précédemment.

Enfin, outre le dispositif d'aide au pilotage, et l'hélicoptère hybride comportant ce dispositif d'aide au pilotage, l'invention a pour objet le procédé d'aide au pilotage d'un hélicoptère hybride mis en oeuvre par ledit dispositif d'aide au pilotage.

Selon l'invention, un procédé d'aide au pilotage d'un hélicoptère hybride muni d'une voiture tournante, d'une première et d'une deuxième demi-ailes pourvues respectivement d'une première et d'une deuxième hélices, et d'une installation motrice comportant au moins un turbomoteur entraînant en permanence en rotation ladite voiture tournante et lesdites hélices en engrenant un système mécanique d'interconnexion, est remarquable en ce que l'on affiche sur un écran de visualisation un pas moyen maximal applicable aux première et deuxième hélices sans excéder la puissance disponible pour les hélices déterminé en fonction du pas moyen actuel des pales des première et deuxième hélices mesuré en temps réel, d'une puissance maximale apte à être délivrée par l'installation motrice, d'une puissance actuelle délivrée par cette installation motrice et d'un gradient de puissance en fonction du pas GRD des première et deuxième hélices.

On détermine optionnellement le pas moyen maximal en procédant aux étapes suivantes durant une phase préliminaire:

- a) on trace un réseau de courbes dans un diagramme présentant en abscisse le pas d'une pale desdites hélices à une distance égale à 0.75 fois l'envergure de cette pale et en ordonnée un coefficient de puissance CP des première et deuxième hélices, chaque courbe étant établie à un coefficient d'avancement donné qui est fonction du quotient de la vitesse air vraie de l'hélicoptère hybride par la vitesse de l'extrémité libre de la pale, ladite vitesse de l'extrémité libre d'une pale de l'hélice étant égale au produit de la vitesse de rotation d'une hélice par l'envergure de cette pale,

- b) on détermine une équation intermédiaire à partir dudit réseau de courbes donnant ledit coefficient de puissance CP en fonction du pas d'une pale des hélices à une distance égale à 0.75 fois l'envergure de cette pale et dudit coefficient d'avancement, à l'aide par exemple d'une méthode usuelle de régression polynomiale et multi-variable, puis on détermine une première équation donnant un gradient de puissance en fonction du pas en fonction de la dérivée partielle de ladite équation intermédiaire par rapport au pas,

puis, en mettant en oeuvre les étapes suivantes en temps réel en vol :

- c) on détermine un gradient de puissance en fonction du pas à l'aide de ladite première équation en calculant ladite dérivée partielle aux valeurs de pas moyen actuel et de coefficient d'avancement actuel,

- d) on détermine le pas moyen maximal à l'aide de la première relation suivante :

$$\beta max = \beta actuel + [(P1*(\Omega/\Omega')) - P2]/GRD$$

où « / » représente le signe de la division,

« * » représente le signe de la multiplication,

« βmax » représente le pas moyen maximal,

« βactuel » représente le pas moyen actuel mesuré en temps réel,

« P1 » représente la puissance maximale apte à être délivrée par l'installation motrice,

« P2 » représente la puissance actuelle délivrée par l'installation motrice,

« Ω » représente la vitesse de rotation desdites première et deuxième hélices,

« Ω' » représente une consigne de la vitesse de rotation desdites première et deuxième hélices, et

« GRD » ledit gradient de puissance en fonction du pas.

Il est à noter que la consigne Ω' de la vitesse de rotation des première et deuxième hélices est élaborée par un organe d'élaboration ne faisant pas l'objet de la présente demande, cette consigne de la vitesse de rotation des première et deuxième hélices étant proportionnelle à la vitesse de rotation de la voilure tournante.

La consigne Ω' de la vitesse de rotation des première et deuxième hélices peut être constante ou variable en fonction notamment de la température extérieure. On se référera par exemple au document FR2916421 pour obtenir plus d'informations sur cette consigne de la vitesse de rotation des première et deuxième hélices.

Eventuellement, on détermine et on affiche sur l'écran de visualisation un pas moyen en autorotation en fonction de la vitesse air vraie de l'hélicoptère hybride et de la vitesse de rotation desdites hélices à l'aide la deuxième relation suivante :

$$\beta 0 = \alpha 0 + \text{arctg}\,[\,VH\,/\,(\Omega {}^{*}0.75{}^{*}R)\,]$$

où « / » représente le signe de la division,

« * » représente le signe de la multiplication,

« arctg» représente la fonction trigonométrique arctangente,

« β0 » représente le pas moyen en autorotation,

« α0 » incidence d'une pale d'une hélice générant une portance nulle de cette pale,

« VH » représente la vitesse air vraie de l'hélicoptère hybride,

« Ω » représente la vitesse de rotation desdites première et deuxième hélices, et

« R » l'envergure de ladite pale.

Enfin, il est concevable d'afficher sur un écran de visualisation une consigne donnée par un dispositif de pilotage automatique.

L'invention et ses avantages apparaîtront avec plus de détails dans le cadre de la description qui suit avec des exemples de réalisation donnés à titre illustratif en référence aux figures annexées qui représentent :

- la figure 1, une vue isométrique d'un hélicoptère hybride,

- la figure 2, un schéma montrant un dispositif d'aide au pilotage d'un tel hélicoptère hybride, et

- la figure 3, un diagramme explicitant une phase préliminaire permettant de déterminer le pas moyen maximal.

Les éléments présents dans plusieurs figures distinctes sont affectés d'une seule et même référence.

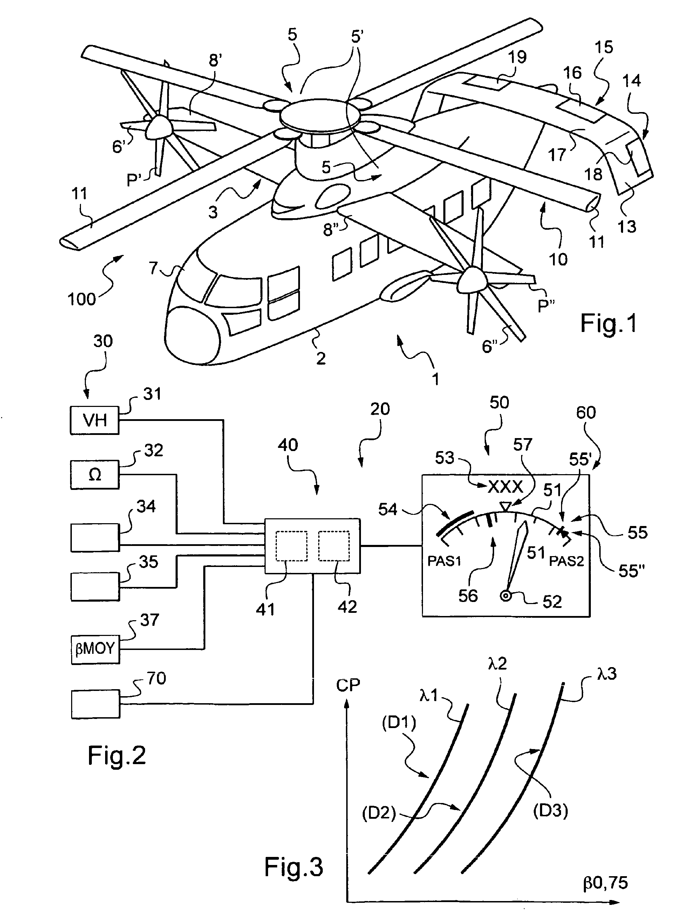

La figure 1 présente un hélicoptère hybride 1 qui comprend un fuselage 2, à l'avant duquel est prévu le poste de pilotage 7, une voilure tournante 100 comportant un rotor principal 10 destiné à entraîner en rotation des pales 11 grâce d'une part à une installation motrice 5' muni de deux turbomoteurs 5 disposés sur le dessus du fuselage 2, de part et d'autre du fuselage 2 par rapport au plan de symétrie longitudinal de l'appareil, et d'autre part à une première boîte d'engrenages principale, non représentée sur la figure 1.

Il est à noter que les deux turbomoteurs 5 ne sont pas visibles sur la figure 1 en raison de la présence de carénages.

De plus, l'hélicoptère hybride 1 est pourvu d'une aile haute 3 composée de deux demi-ailes 8', 8" disposées sur le dessus du fuselage 2.

La propulsion de l'hélicoptère hybride 1 est assurée notamment par une première et une deuxième hélices 6', 6" entraînées par les deux turbomoteurs 5, une hélice 6', 6" étant disposée à chaque extrémité externe de l'aile 3. Les première et deuxième hélices 6', 6" comportent respectivement six premières pales P' et six deuxièmes pales P" sur l'exemple représenté.

Par ailleurs, il est éventuellement prévu, au voisinage de l'extrémité arrière du fuselage 2, des surfaces de stabilisation et de manoeuvre à savoir pour la profondeur, un empennage horizontal 15 avec deux gouvernes de profondeur mobiles 16, 19 par rapport à la partie avant 17 et pour la direction deux empennages verticaux 14, chacun de chaque côté de l'empennage horizontal 15.

En l'occurrence, l'empennage horizontal 15 et les empennages verticaux 14 forment un U renversé vers le fuselage 2.

Avantageusement, les empennages 14, verticaux ou inclinés par rapport à la verticale, peuvent être constitués d'une partie avant fixe 13 avec en arrière une partie mobile 18.

Cet hélicoptère hybride 1 est notamment remarquable, par rapport aux autres aéronefs en ce que les vitesses de rotation des sorties des turbomoteurs, des hélices, du rotor et du système mécanique d'interconnexion sont proportionnelles entre elles, le rapport de proportionnalité étant constant quelle que soit la configuration de vol de l'hélicoptère hybride en conditions normales de fonctionnement de la chaîne cinématique intégrée.

Pour contrôler l'avancement de l'hélicoptère hybride, le pilote dispose d'une commande de poussée permettant de modifier le pas moyen des premières et deuxièmes pales P', P" des première et deuxième hélices 6', 6".

Plus précisément, la commande de poussée agit de manière identique sur les premier et deuxième pas des premières et deuxièmes pales P', P" afin d'obtenir une variation collective de ces premier et deuxième pas. Par exemple, le pilote va requérir une augmentation de 5° du pas moyen de l'ensemble des pales des hélices pour augmenter la poussée résultante générée notamment par les première et deuxième hélices, ledit pas moyen des pales des première et deuxième hélices étant égal à la demi-somme des premier et deuxième pas des premières et deuxièmes pales P', P".

La commande de poussée peut comprendre un levier agissant sur une chaine cinématique reliée aux première et deuxième hélices.

De manière alternative ou complémentaire, la commande de poussée est éventuellement pourvue d'un bouton apte à commander au moins un vérin disposé sur ladite chaîne cinématique. Ce bouton possède avantageusement trois positions, à savoir une première position requérant une augmentation du pas moyen des pales des première et deuxième hélices, et donc une variation collective et de la même quantité des premier et deuxième pas des premières et deuxièmes pales P', P" , une deuxième position requérant une diminution des premier et deuxième pas des premières et deuxièmes pales P', P" et enfin une troisième position ne requérant pas une modification des premier et deuxième pas des premières et deuxièmes pales P', P".

Pour contrôler l'attitude en lacet de l'hélicoptère hybride, le pilote dispose d'un dispositif de commande en lacet muni d'un moyen de commande en lacet, classiquement un palonnier, pour engendrer une variation non plus collective mais différentielle des premier et deuxième pas des premières et deuxièmes pales P', P".

Enfin, l'hélicoptère hybride 1 est muni de moyens de commande pour contrôler le pas collectif et le pas cyclique des pales 11 du rotor principal 10.

Afin d'éviter d'être confronté à des manoeuvres susceptibles de mettre en péril l'hélicoptère hybride, cet hélicoptère hybride est muni d'un dispositif d'aide au pilotage.

La figure 2 présente un tel dispositif d'aide au pilotage 20.

Le dispositif d'aide au pilotage 20 comporte un moyen d'affichage 50 ainsi qu'une pluralité 30 de capteurs reliés à un moyen de calcul 40, ce moyen de calcul 40 étant muni d'un organe de calcul 41 et d'une mémoire 42.

Selon le procédé mis en oeuvre par le dispositif d'aide au pilotage 20, on affiche sur un écran de visualisation 60 du moyen d'affichage 50 un premier symbole 55 représentant un pas moyen maximal applicable aux première et deuxième hélices sans excéder la puissance disponible pour les hélices, c'est-à-dire sans consommer la puissance nécessaire au bon fonctionnement du rotor principal 10.

Le moyen de calcul 40 est alors relié à:

- un capteur de pas moyen 37 apte à mesurer le pas moyen actuel des pales des première et deuxième hélices 6', 6" en temps réel,

- un organe de régulation 34 de l'installation motrice, cet organe de régulation 34 délivrant une première et une deuxième informations de puissance au moyen de calcul 40, les première et deuxième informations de puissance étant respectivement relatives à la puissance maximale déterminée par le constructeur apte à être délivrée par l'installation motrice et à la puissance actuelle délivrée par cette installation motrice 5',

- un capteur de vitesse air 31 apte à mesurer la vitesse air vraie de l'hélicoptère hybride,

- un capteur de vitesse de rotation 32 apte à mesurer la vitesse de rotation des hélices de l'hélicoptère hybride,

- un capteur de densité 35 apte à mesurer la densité de l'air.

Il est à noter que le capteur de pas moyen 37 peut être un capteur dédié à la présente application, ou d'ores et déjà présent sur ledit hélicoptère hybride 1 pour d'autres applications, voire intégré dans d'autres équipements.

Dès lors, le moyen de calcul peut alors déterminer la valeur du pas moyen maximal à ne pas dépasser, ce pas moyen maximal variant de fait au cours du temps suivant les évolutions de l'hélicoptère hybride 1.

Plus précisément, en référence à la figure 3 et durant une phase préliminaire:

- a) on trace un réseau de courbes D1, D2, D3 dans un diagramme présentant en abscisse le pas β0.75 d'une pale des hélices 6',6" à une distance égale à 0.75 fois l'envergure R de cette pale et en ordonnée le coefficient de puissance CP des première et deuxième hélices 6',6", chaque courbe D1, D2, D3 étant établie à un coefficient d'avancement λ1, λ2, λ3 donné, puis

- b) on détermine une équation intermédiaire à partir du réseau de courbes, donnant le coefficient de puissance CP en fonction dudit pas β0.75 d'une pale d'une hélice à une distance égale à 0.75 fois l'envergure R de cette pale, et du coefficient d'avancement.

On rappelle que le coefficient de puissance CP d'une hélice est égal à :

$$CP = \frac{P}{0.5 \times \rho \times \pi \times R^2 \times U^3}$$

Avec P représentant la puissance de l'hélice, $\rho$ la densité de l'air, R l'envergure d'une pale de l'hélice et U la vitesse de l'extrémité libre d'une pale de l'hélice.

Ainsi, durant l'étape b), on établit par essais le réseau de courbes D1, D2, D3. Chaque courbe D1, D2, D3 est établie à un coefficient d'avancement λ1, λ2, λ3 prédéterminé, chaque coefficient d'avancement λ1, λ2, λ3 étant égal au quotient d'une vitesse air vraie VH de l'hélicoptère hybride par la vitesse U de l'extrémité libre de la pale, ladite vitesse U de l'extrémité libre de la pale étant égale au produit de la vitesse de rotation Ω d'une hélice par son envergure R.

Il est à noter que la figure 3 présente trois courbes D1, D2, D3. Néanmoins, on comprend bien qu'un nombre plus important de courbes peut être utilisé.

Il suffit alors de mettre en oeuvre une méthode mathématique usuelle, de régression polynomiale par exemple, pour déterminer ladite équation intermédiaire CP=f(β0.75, λ).

Ensuite, on détermine une première équation donnant un gradient de puissance en fonction du pas GRD en fonction de la dérivée partielle $\dfrac{\partial CP}{\partial \beta}$ de ladite équation intermédiaire par rapport au pas. Ainsi la première équation est :

$$GRD = 0.5 \times \rho \times \pi \times R^2 \times U^3 \times \frac{\partial CP}{\partial \beta}(\beta, \lambda)$$

avec $\rho$ densité de l'air, et « x » le signe de la multiplication.

La première équation est alors stockée dans la mémoire 42 du moyen de calcul 40.

Dans ces conditions, on met en oeuvre en vol les étapes suivantes en temps réel.

Durant une étape c), le moyen de calcul 40 détermine un gradient de puissance en fonction du pas GRD en temps réel à l'aide de la première équation, stocké dans la mémoire 42, en calculant la valeur de ladite dérivée partielle au pas moyen actuel βactuel et au coefficient d'avancement actuel λactuel déterminés en temps réel en vol. Plus précisément, le gradient de puissance en fonction du pas GRD actuel est égal à la valeur de ladite première équation au pas moyen actuel βactuel, à la vitesse actuelle Uactuel de l'extrémité libre de la pale, à la densité de l'air actuelle ρactuel et au coefficient d'avancement actuel λactuel soit à :

$$GRD = 0.5 \times \rho\text{actuel} \times \pi \times R^2 \times U\text{actuel}^3 \frac{\partial CP}{\partial \beta}(\beta\text{actuel}, \lambda\text{actuel})$$

Une fois le gradient de puissance en fonction du pas GRD actuel déterminé en temps réel, durant une étape d), on détermine le pas moyen maximal βmax, via le moyen de calcul 40, à l'aide de la première relation suivante :

$$\beta\text{max} = \beta\text{actuel} + [(P1*(\Omega/\Omega')) - P2]/GRD$$

où « / » représente le signe de la division,

« * » représente le signe de la multiplication,

« βmax » représente le pas moyen maximal,

« βactuel » représente le pas moyen actuel mesuré en temps réel par le capteur de pas moyen 37,

« P1 » représente la puissance maximale apte à être délivrée par l'installation motrice, cette puissance maximale étant transmise au moyen de calcul 40 par l'organe de régulation 34 sous la forme d'une première information de puissance,

« P2 » représente la puissance actuelle délivrée par l'installation motrice, cette puissance actuelle délivrée étant transmise au moyen de calcul 40 par l'organe de régulation 34 sous la forme d'une deuxième information de puissance,

« $\Omega$ » représente la vitesse de rotation desdites première et deuxième hélices,

« $\Omega'$ » représente la consigne de la vitesse de rotation desdites première et deuxième hélices, et

GRD ledit gradient de puissance en fonction du pas déterminé en temps réel par le moyen de calcul 40 lors de l'étape c).

Les étapes c) et d) sont alors réalisées en boucle durant le vol pour que le pas moyen maximal puisse être déterminé en permanence et en temps réel.

Par ailleurs, la première information de puissance peut contenir une première puissance maximale apte à être délivrée par l'installation motrice à un premier régime de fonctionnement PMC, et une deuxième puissance maximale apte à être délivrée par l'installation motrice à un deuxième régime de fonctionnement PMD.

Durant l'étape d), le moyen de calcul 40 détermine alors un premier pas moyen maximal pour le premier régime de fonctionnement PMC et un deuxième pas moyen maximal pour le deuxième régime de fonctionnement PMD.

Le moyen de calcul 40 commande alors le moyen d'affichage 50 pour présenter sur un écran de visualisation 60 un premier symbole primaire 55' représentant le premier pas moyen maximal et un premier symbole secondaire 55" représentant le deuxième pas moyen maximal.

Après avoir déterminé le pas moyen maximal des pales des première et deuxième hélices, le moyen de calcul 40 ordonne au moyen d'affichage 50 d'afficher le premier symbole 55, représentant ce pas moyen maximal, sur l'échelle angulaire 51 graduée.

En accord avec la figure 2, l'écran d'affichage montre un secteur angulaire 51 gradué en degrés de pas moyen des pales des première et deuxième hélices, ce secteur angulaire allant d'un premier pas moyen PAS1, de l'ordre de -10 degrés par exemple, à un deuxième pas moyen PAS2, d'une valeur de 45 degrés par exemple.

Le premier symbole 55 apparaît alors sur ce secteur angulaire 51.

Par ailleurs, le moyen de calcul 40 détermine un pas moyen en autorotation en fonction de la vitesse air vraie VH de l'hélicoptère hybride 1 et de la vitesse de rotation desdites hélices 6', 6".

Plus précisément, les capteurs de vitesse air 31 et de rotation 32 mesurent et transmettent respectivement une première et une deuxième informations de vitesse au moyen de calcul 40, la première information de vitesse étant relative à la vitesse air vraie VH de l'hélicoptère hybride 1 alors que la deuxième information de vitesse est relative à la vitesse de rotation $\Omega$ des hélices.

Les capteurs de vitesse air 31 et de rotation 32 sont d'un type classique disponible dans le commerce, ou peuvent faire partie d'autres dispositifs de l'hélicoptère hybride 1.

Le moyen de calcul 40 détermine alors un pas moyen en autorotation des pales des première et deuxième hélices, qui varie en fonction des évolutions de l'hélicoptère hybride 1.

Par suite, le moyen de calcul 40 détermine et affiche sur l'écran de visualisation 60 un pas moyen en autorotation $\beta0$ en fonction de la vitesse air vraie VH de hélicoptère hybride 1 et de la vitesse de rotation $\Omega$ des hélices 6', 6" à l'aide la deuxième relation suivante :

$$\beta0 = \alpha0 + arctg\ [VH\ /\ (\Omega*0.75*R)\ ]$$

où « / » représente le signe de la division,

« * » représente le signe de la multiplication,

« arctg» représente la fonction trigonométrique arctangente,

« $\beta0$ » représente le pas moyen en autorotation,

« $\alpha0$ » incidence d'une pale d'une hélice générant une portance nulle de cette pale,

« VH » représente la vitesse air vraie de l'hélicoptère hybride,

« $\Omega$ » représente la vitesse de rotation desdites hélices, et

« R » l'envergure de ladite pale.

A titre de variante, il est concevable de déterminer une deuxième équation dans la mémoire 42 du moyen de calcul 40 pour obtenir le pas moyen en autorotation en fonction de la vitesse d'avancement.

Ainsi, lors d'une phase préliminaire, on établit un diagramme présentant en abscisse le pas $\beta0.75$ d'une pale d'une hélice à une distance égale à 0.75 fois l'envergure R de cette pale, et en ordonnée le coefficient de poussée Ct de cette hélice. On réalise alors des essais pour tracer une pluralité de courbes dans ce diagramme, chaque courbe étant établie en fonction d'une vitesse d'avancement donnée.

Par une méthode mathématique de régression polynomiale inverse usuelle, on en déduit une équation intermédiaire $\beta0=f(Ct,\lambda)$. Afin d'établir la deuxième équation requise, il suffit d'annuler les termes de cette équation dépendant du coefficient de poussée Ct dans la mesure où l'on souhaite obtenir le pas moyen en autorotation à poussée nulle.

La deuxième équation est alors de la forme $\beta0=f(\lambda)$.

Le moyen de calcul 40 détermine alors le pas moyen en autorotation $\beta0$ en temps réel à l'aide du coefficient d'avancement actuel à chaque instant.

Une fois le pas moyen en autorotation déterminé, le moyen de calcul 40 ordonne au moyen d'affichage 50 de faire apparaître un deuxième symbole 56 sur son écran d'affichage 60, le deuxième symbole représentant le pas moyen en autorotation des pales des première et deuxième hélices.

Il est à noter que le deuxième symbole est important pour le pilote puisque le pas moyen en autorotation représente le pas moyen induisant une poussée nulle de chaque hélice.

Afin de garantir une bonne exécution d'une procédure d'autorotation, le pilote n'aura alors qu'à régler le pas moyen réel des pales des première et deuxième hélices afin qu'il soit égal au pas moyen en autorotation affiché via le deuxième symbole 56. On comprend que le dispositif d'aide au pilotage facilite l'opération.

Par ailleurs, pour protéger la chaîne de transmission mécanique de l'hélicoptère hybride, en vol d'avancement, le pilote n'a qu'à vérifier que le pas moyen réel, à savoir le pas moyen à un instant donné, est supérieur au pas moyen en autorotation.

Optionnellement, le moyen de calcul 40 ordonne l'affichage du pas moyen en autorotation des pales des première et deuxième hélices dans certaines conditions, à savoir si:

- le pas moyen en autorotation des pales des première et deuxième hélices est supérieur à 5 degrés, et si

- la vitesse air vraie VH mesurée est supérieure à 20 mètres par seconde.

En outre, pour que le pilote puisse comparer le pas moyen réel des pales des première et deuxième hélices au pas moyen en autorotation notamment, le moyen de calcul 40 est avantageusement relié à un capteur de pas moyen 37, ce capteur de pas moyen 37 transmettant au moyen de calcul 40 la valeur du pas moyen actuel βmoy.

Le moyen de calcul 40 ordonne alors au moyen d'affichage de présenter ce pas moyen actuel βmoy des pales des première et deuxième hélices sur son écran d'affichage 60. Le pas moyen actuel est éventuellement affiché via un affichage numérique 53 et / ou via une aiguille 52 balayant le secteur angulaire 51.

Par suite, le pilote sait instantanément où se situe le pas moyen actuel des pales des première et deuxième hélices par exemple.

Par ailleurs, selon la variante représentée, on affiche sur l'écran de visualisation 60 un troisième symbole 57 correspondant à une consigne donnée par un dispositif de pilotage automatique, cette consigne étant susceptible de varier au cours du temps.

Le moyen de calcul 40 est alors relié à un dispositif de pilotage automatique 70 de l'hélicoptère hybride 1, ce dispositif de pilotage automatique 70 envoyant au moyen de calcul 40 ladite consigne.

Dés lors, le moyen de calcul 40 indique au moyen d'affichage d'afficher sur l'échelle angulaire 51 de son écran d'affichage 60 un troisième symbole 57 représentant la consigne.

De plus, la couleur du troisième symbole peut varier suivant le mode de pilotage, en ayant une première couleur durant un vol en pilotage automatique et une deuxième couleur durant un vol en pilotage semi-automatique ou assisté.

Enfin, le moyen de calcul 40 décrit sur la figure 2 comporte une mémoire 42 stockant une plage optimisée pour effectuer un vol en stationnaire sans consommer une puissance importante et sans induire un cabrage non négligeable.

Le moyen de calcul 40 ordonne alors au moyen d'affichage 50 d'afficher un quatrième symbole 54, représentant ladite plage optimisée, sur l'échelle angulaire 51 graduée qui apparaît sur son écran de visualisation 60.

Il est à noter que la plage optimisée est fixe, contrairement au pas moyen en autorotation des pales des première et deuxième hélices, au pas moyen maximal des pales des première et deuxième hélices ou à la consigne donnée en pilotage automatique, cette plage optimisée étant déterminée par essais ou par calcul par exemple.

Ainsi, le pilote peut utiliser un unique dispositif d'aide au pilotage 20 pour piloter le pas moyen des pales des première et deuxième hélices 6', 6".

En effet, ce dispositif d'aide au pilotage 20 affiche l'ensemble des symboles 55, 56, 57, 54 destinés à l'aider lors de diverses manoeuvres, lesdits symboles apparaissant sur une échelle 51 graduée en pas moyen des pales des première et deuxième hélices.

De plus, le dispositif d'aide au pilotage 20 permet l'affichage du pas moyen réel des pales des première et deuxième hélices 6', 6", ce qui permet au pilote de comparer ce pas moyen réel aux valeurs à respecter. Ainsi, le pilote se sert du dispositif d'aide au pilotage 20 durant :

- un vol en autorotation en alignant le pas moyen réel sur le deuxième symbole,

- un vol d'avancement en choisissant un pas moyen actuel inférieur au premier symbole,

- un vol assisté par un dispositif de vol automatique, en alignant le pas moyen réel sur la consigne provenant dudit dispositif de pilotage automatique, et

- un vol en stationnaire, en choisissant un pas moyen réel compris dans la plage optimisée prédéterminée.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Par exemple, la figure 1 présente une voilure tournante 100 munie d'un rotor principal 10. Bien évidemment, il est possible de munir cette voilure tournante 100 de deux rotors principaux 10 tournant à la même vitesse de rotation par exemple, et optionnellement contrarotatifs.

## Revendications

**1.** Dispositif d'aide au pilotage d'un hélicoptère hybride muni d'une voilure tournante (100), d'une première et d'une deuxième demi-ailes (8', 8") pourvues respectivement d'une première et d'une deuxième hélices (6',6"), et d'une installation motrice (5') ayant au moins un turbomoteur (5) entraînant en permanence en rotation ladite voilure tournante (100) et lesdites hélices (6',6") en engrenant un système mécanique d'interconnexion, **caractérisé en ce que**, ledit dispositif d'aide au pilotage (20) étant apte à recevoir une première et une deuxième

EP 2 258 615 B1

informations de puissance en provenance d'un organe de régulation (34) de ladite installation motrice (5'), lesdites première et deuxième informations de puissance étant respectivement relatives à une puissance maximale (P1) apte à être délivrée par ladite installation motrice (5') et à une puissance actuelle délivrée (P2) par cette installation motrice (5'), ledit dispositif d'aide au pilotage(20) comporte :

- un capteur de pas moyen (37) apte à mesurer un pas moyen actuel des pales des première et deuxième hélices (6',6"), en temps réel,
- un capteur de vitesse air (31) apte à mesurer la vitesse air vraie de l'hélicoptère hybride,
- un capteur de vitesse de rotation (32) apte à mesurer la vitesse de rotation des hélices de l'hélicoptère hybride.
- un capteur de densité (35) apte à mesurer la densité de l'air
- un moyen de calcul (40) muni d'une mémoire (42) comportant une première équation déterminant un gradient de puissance en fonction du pas (GRD) desdites première et deuxième hélices (6', 6"), le moyen de calcul (40) étant relié au capteur de pas moyen (37), au capteur de vitesse air (31), au capteur de vitesse de rotation (32) et au capteur de densité de l'air (35) et étant apte à recevoir lesdites première et deuxième informations de puissance pour déterminer un pas moyen maximal (βmax) applicable auxdites première et deuxième hélices (6', 6") sans excéder la puissance disponible pour lesdites hélices (6', 6"), ledit moyen de calcul (40) déterminant ledit pas moyen maximal (βmax) en fonction dudit pas moyen actuel (βactuel), des première et deuxième informations de puissance et dudit gradient de puissance en fonction du pas,
- un moyen d'affichage (50) apte à présenter sur un écran de visualisation (60) ledit pas moyen maximal (βmax).

2. Dispositif selon la revendication 1,
caractérisé en ce que ledit moyen de calcul (40) commande ledit moyen d'affichage (50) pour présenter sur un écran de visualisation (60) un premier symbole (55) représentant ledit pas moyen maximal (βmax).

3. Dispositif selon la revendication 2,
caractérisé en ce que ladite première information de puissance contenant une première puissance maximale apte à être délivrée par ladite installation motrice à un premier régime de fonctionnement (PMC), et une deuxième puissance maximale apte à être délivrée par ladite installation motrice à un deuxième régime de fonctionnement (PMD), ledit moyen de calcul (40) déterminant un premier pas moyen maximal pour le premier régime de fonctionnement (PMC) et un deuxième pas moyen maximal pour le deuxième régime de fonctionnement (PMD), que ledit moyen de calcul (40) commande ledit moyen d'affichage (50) pour présenter sur un écran de visualisation (60) un premier symbole primaire (55') représentant ledit premier pas moyen maximal et un premier symbole secondaire (55") représentant ledit deuxième pas moyen maximal.

4. Dispositif selon l'une quelconque des revendications précédentes,
caractérisé en ce que, le dispositif comportant un capteur de vitesse air (31) apte à mesurer et à transmettre une première information de vitesse relative à la vitesse air vraie (VH) dudit hélicoptère hybride (1) audit moyen de calcul (40), ainsi qu'un capteur de vitesse de rotation (32) apte à mesurer et à transmettre une deuxième information de vitesse relative à la vitesse de rotation (Ω) desdites hélices (6', 6") audit moyen de calcul (40), ledit moyen de calcul (40) détermine un pas moyen en autorotation (β0) générant une poussée nulle des première et deuxième hélices (6', 6") en fonction des première et deuxième informations de vitesse.

5. Dispositif selon la revendication 4,
caractérisé en ce que ledit moyen de calcul (40) commande ledit moyen d'affichage (50) pour présenter sur un écran de visualisation (60) un deuxième symbole (56) représentant ledit pas moyen en autorotation (β0).

6. Dispositif selon la revendication 5,
caractérisé en ce que ledit moyen de calcul (40) commande ledit moyen d'affichage (50) pour présenter sur un écran de visualisation (60) un deuxième symbole (56) représentant ledit pas moyen en autorotation (β0) si :

- ledit pas moyen en autorotation (β0) est supérieur à 5 degrés, et si
- la vitesse air vraie (VH) mesurée est supérieure à 20 mètres par seconde.

7. Dispositif selon l'une quelconque des revendications précédentes,
caractérisé en ce que, ledit dispositif d'aide au pilotage (20) étant apte à être relié à un dispositif de pilotage automatique (70) dudit hélicoptère hybride (1), le moyen de calcul (40) est apte à commander le moyen d'affichage (50) pour présenter un troisième symbole (57) sur ledit écran de visualisation (60), ledit troisième symbole (57) étant relatif à une consigne de pas donnée par ledit dispositif de pilotage automatique (70).

**8.** Dispositif selon l'une quelconque des revendications précédentes,
**caractérisé en ce que**, ladite mémoire (42) stockant une plage optimisée de pas moyen lors d'un vol en stationnaire, ledit moyen de calcul (40) commande au moyen d'affichage (50) de présenter un quatrième symbole (54) sur ledit écran de visualisation (60), ledit quatrième symbole (54) représentant ladite plage optimisée.

**9.** Dispositif selon l'une quelconque des revendications précédentes,
**caractérisé en ce que** ledit moyen de calcul (40) étant apte à ordonner l'affichage d'au moins un symbole (54, 55, 56, 57) sur ledit écran de visualisation (60), chaque symbole (54, 55, 56, 57) est positionné sur un secteur angulaire (51) gradué en degrés de pas.

**10.** Dispositif selon la revendication 9,
**caractérisé en ce que** le moyen de calcul (40) ordonne l'affichage dudit pas moyen actuel, le moyen d'affichage (50) présentant le pas moyen actuel via une aiguille (52) apte à balayer ledit secteur angulaire ou via ladite aiguille (52) et un affichage numérique (53).

**11.** Hélicoptère hybride (1) muni d'une voilure tournante (100), d'une première et d'une deuxième demi-ailes (8', 8") pourvues respectivement d'une première et d'une deuxième hélices (6',6"), et d'une installation motrice comportant au moins un turbomoteur (5) entraînant en permanence en rotation ladite voilure tournantel (100) et lesdites hélices (6',6") en engrenant un système mécanique d'interconnexion,
**caractérisé en ce qu'**il comporte un dispositif d'aide au pilotage (20) selon l'une quelconque des revendications précédentes.

**12.** Procédé d'aide au pilotage d'un hélicoptère hybride (1) selon la revendication 11 muni d'une voilure tournante (100), d'une première et d'une deuxième demi-ailes (8', 8") pourvues respectivement d'une première et d'une deuxième hélices (6',6"), et d'une installation motrice (5') comportant au moins un turbomoteur (5) entraînant en permanence en rotation ladite la voilure tournante (100) et lesdites hélices (6',6") en engrenant un système mécanique d'interconnexion,
**caractérisé en ce que** l'on affiche sur un écran de visualisation (60) un pas moyen maximal applicable auxdites première et deuxième hélices (6', 6") sans excéder la puissance disponible pour lesdites hélices (6', 6") déterminé en fonction du pas moyen actuel des pales des première et deuxième hélices (6',6") mesuré en temps réel, d'une puissance maximale apte à être délivrée par ladite installation motrice, d'une puissance actuelle délivrée par cette installation motrice et d'un gradient de puissance en fonction du pas (GRD) desdites première et deuxième hélices (6',6").

**13.** Procédé selon la revendication 12,
**caractérisé en ce que** l'on détermine ledit pas moyen maximal en procédant aux étapes suivantes durant une phase préliminaire:

- a) on trace un réseau de courbes (D1, D2, D3) dans un diagramme présentant en abscisse le pas ($\beta$0.75) d'une pale desdites hélices à une distance égale à 0.75 fois l'envergure (R) de cette pale et en ordonnée le coefficient de puissance (CP) des première et deuxième hélices(6',6"), chaque courbe (D1, D2, D3) étant établie à un coefficient d'avancement ($\lambda$) donné fonction du quotient de la vitesse air vraie (VH) de l'hélicoptère hybride par la vitesse (U) de l'extrémité libre de la pale, ladite vitesse (U) de l'extrémité libre de la pale étant égale au produit de la vitesse de rotation ($\Omega$) d'une hélice par l'envergure (R) de cette pale,
- b) on détermine une équation intermédiaire à partir dudit réseau de courbes donnant ledit coefficient de puissance (CP) en fonction dudit pas ($\beta$0.75) d'une pale desdites hélices à une distance égale à 0.75 fois l'envergure (R) de cette pale et dudit coefficient d'avancement ($\lambda$), puis on détermine une première équation donnant un gradient de puissance en fonction du pas (GRD) en fonction de la dérivée partielle de ladite équation intermédiaire par rapport au pas, à savoir :

$$GRD = 0.5 \times \rho \times \pi \times R^2 \times U^3 \times \frac{\partial CP}{\partial \beta}(\beta 0.75, \lambda)$$

avec p densité de l'air et U vitesse de l'extrémité libre de la pale
puis, en mettant en oeuvre les étapes suivantes en temps réel en vol :

- c) on détermine un gradient de puissance en fonction du pas (GRD) à l'aide de ladite première équation en calculant ladite première équation aux valeurs de pas moyen actuel, de densité de l'air actuelle, de vitesse d'extrémité libre de la pale actuelle et de coefficient d'avancement actuel,
- d) on détermine ledit pas moyen maximal (βmax) à l'aide de la première relation suivante :

$$\beta max = \beta actuel + [(P1*(\Omega/\Omega'))-P2]/GRD$$

où « / » représente le signe de la division,
« * » représente le signe de la multiplication,
« βmax » représente le pas moyen maximal,
« βactuel » représente le pas moyen actuel mesuré en temps réel,
« P1 » représente la puissance maximale apte à être délivrée par l'installation motrice,
« P2 » représente la puissance actuelle délivrée par l'installation motrice,
« Ω » représente la vitesse de rotation desdites première et deuxième hélices,
« Ω' » représente une consigne de la vitesse de rotation desdites première et deuxième hélices, et
« GRD » ledit gradient de puissance en fonction du pas.

**14.** Procédé selon l'une quelconque des revendications 12 à 13,
**caractérisé en ce que** l'on détermine et on affiche sur ledit écran de visualisation (60) un pas moyen en autorotation (β0) en fonction de la vitesse air vraie (VH) dudit hélicoptère hybride (1) et de la vitesse de rotation (Ω) desdites hélices (6', 6") à l'aide la deuxième relation suivante :

$$\beta0 = \alpha0 + arctg [VH / (\Omega*0.75*R) ]$$

où « / » représente le signe de la division,
« * » représente le signe de la multiplication
« arctg » représente la fonction trigonométrique arctangente
« β0 » représente le pas moyen en autorotation,
« α0 » incidence d'une pale d'une hélice générant une portance nulle de cette pale,
« VH » représente la vitesse air vraie de l'hélicoptère hybride,
« Ω » représente la vitesse de rotation desdites hélices, et
« R » l'envergure de ladite pale.

**15.** Procédé selon l'une quelconque des revendications 10 à 14,
**caractérisé en ce que** l'on affiche sur un écran de visualisation (60) une consigne donnée par un dispositif de pilotage automatique (70).


**Patentansprüche**

**1.** Hilfsvorrichtung zum Steuern eines Hybridhelikopters mit Drehflügeln (100), einem ersten und einem zweiten Halbflügel (8', 8"), die jeweils mit einem ersten bzw. einem zweiten Propeller (6', 6") versehen sind, und einer Antriebseinrichtung (5') mit mindestens einem Turbomotor (5), der ständig die Drehflügel (100) und Propeller (6', 6") zu einer Drehbewegung antreibt, indem ein mechanisches Verbindungssystem ineinandergreift,
**dadurch gekennzeichnet, dass** die Hilfsvorrichtung (20) zum Steuern eine erste und eine zweite Information über eine Leistung von einem Regelorgan (34) der Antriebseinrichtung (5') empfangen kann, wobei die ersten und zweiten Informationen über eine Leistung sich jeweils auf eine maximale Leistung (P1), die von der Antriebseinrichtung (5') geliefert werden kann, und auf eine gelieferte Ist-Leistung (P2), die von dieser Antriebseinrichtung (5') geliefert wird, beziehen, wobei die Hilfsvorrichtung (20) zum Steuern aufweist:

- einen Detektor zur Erfassung eines mittleren Verstellwinkels (37), der einen mittleren Ist-Verstellwinkel der Blätter der ersten und zweiten Propeller (6', 6") in Echtzeit messen kann,
- einen Luftgeschwindigkeitsdetektor (31), der die tatsächliche Luftgeschwindigkeit des Hybridhelikopters messen kann,

- einen Rotationsgeschwindigkeitsdetektor (32), der die Rotationsgeschwindigkeit der Propeller des Hybridhelikopters messen kann,

- einen Dichtesensor (35), der die Luftdichte messen kann,

- ein Rechenmittel (40) mit einem Speicher (42), in dem eine erste Gleichung gespeichert ist, die einen Leistungsgradienten in Funktion des Verstellwinkels (GRD) der ersten und zweiten Propeller (6', 6") bestimmt, wobei das Rechenmittel (40) mit dem Detektor zur Erfassung des mittleren Verstellwinkels (37), mit dem Luftgeschwindigkeitsdetektor (31), dem Drehgeschwindigkeitsdetektor (32) und dem Luftdichtesensor (35) verbunden ist, und die ersten und zweiten Informationen über eine Leistung empfangen kann, um einen maximalen mittleren Verstellwinkel ($\beta$max), der bei den ersten und zweiten Propellern (6', 6") anwendbar ist, zu bestimmen, ohne die für die Propeller (6', 6") zur Verfügung stehende Leistung zu überschreiten, wobei das Rechenmittel (40) den maximalen mittleren Verstellwinkel ($\beta$max) in Abhängigkeit von dem mittleren Ist-Verstellwinkel ($\beta$actuel), von den ersten und zweiten Informationen über die Leistung und von dem Leistungsgradienten in Abhängigkeit von dem Verstellwinkel bestimmt,

- ein Anzeigemittel (50), welches auf einem Sichtbildschirm (60) den maximalen mittleren Verstellwinkel ($\beta$max) anzeigen kann.

2. Vorrichtung nach Anspruch 1,
**dadurch gekennzeichnet, dass** das Rechenmittel (40) das Anzeigemittel (50) so steuert, dass es auf einem Anzeigebildschirm (60) ein erstes Symbol (55) anzeigt, welches den maximalen mittleren Verstellwinkel ($\beta$max) darstellt.

3. Vorrichtung nach Anspruch 2,
**dadurch gekennzeichnet, dass** die erste Information über eine Leistung eine erste maximale Leistung enthält, die von der Antriebseinrichtung unter einer ersten Betriebsbedingung (PMC) geliefert werden kann, und eine zweite maximale Leistung, die von der Antriebseinrichtung unter einer zweiten Betriebsbedingung (PMD) geliefert werden kann, wobei das Rechenmittel (40) für die erste Betriebsbedingung (PMC) einen ersten maximalen mittleren Verstellwinkel bestimmt und einen zweiten maximalen Verstellwinkel für die zweite Betriebsbedingung (PMD), wobei das Rechenmittel (40) das Anzeigemittel (50) so steuert, dass es auf einem Anzeigebildschirm (60) ein erstes primäres Symbol (55') anzeigt, welches den ersten maximalen mittleren Verstellwinkel darstellt, und ein erstes sekundäres Symbol (55"), welches den zweiten maximalen Verstellwinkel darstellt.

4. Vorrichtung nach einem der vorstehenden Ansprüche,
**dadurch gekennzeichnet, dass** die Vorrichtung einen Luftgeschwindigkeitsdetektor (31) aufweist, der eine erste Information über eine Geschwindigkeit relativ zu der tatsächlichen Luftgeschwindigkeit (VH) des Hybridhelikopters (1) messen und an das Rechenmittel (40) übertragen kann, sowie einen Drehgeschwindigkeitsdetektor (32), der eine zweite Geschwindigkeit bezüglich der Drehgeschwindigkeit ($\Omega$) der Propeller (6', 6") messen und an das Rechenmittel (40) übertragen kann, wobei das Rechenmittel (40) einen mittleren Verstellwinkel bei Autorotation ($\beta$0) bestimmt, die einen Schub Null der ersten und zweiten Propeller (6', 6") erzeugt in Abhängigkeit von den ersten und zweiten Geschwindigkeitsinformationen.

5. Vorrichtung nach Anspruch 4,
**dadurch gekennzeichnet, dass** das Rechenmittel (40) das Anzeigemittel (50) so steuert, dass es auf einem Anzeigebildschirm (60) ein zweites Symbol (56) anzeigt, welches den mittleren Verstellwinkel bei Autorotation ($\beta$0) darstellt.

6. Vorrichtung nach Anspruch 5,
**dadurch gekennzeichnet, dass** das Rechenmittel (40) das Anzeigemittel (50) so steuert, dass es auf einem Anzeigebildschirm (60) ein zweites Symbol (56) anzeigt, welches den mittleren Verstellwinkel bei Autorotation ($\beta$0) darstellt, wenn:

- der mittlere Verstellwinkel bei Autorotation ($\beta$0) größer als 5 Grad ist, und wenn
- die gemessene tatsächliche Luftgeschwindigkeit (VH) größer ist als 20 Meter pro Sekunde.

7. Vorrichtung nach einem der vorstehenden Ansprüche,
**dadurch gekennzeichnet, dass** die Hilfsvorrichtung zum Steuern (20) mit einer automatischen Steuervorrichtung (70) des Hybridhelikopters (1) verbunden werden kann, wobei das Rechenmittel (40) das Anzeigemittel (50) steuern kann, um ein drittes Symbol (57) auf dem Anzeigebildschirm (60) anzuzeigen, wobei das dritte Symbol (57) sich auf einen Sollwert für den Verstellwinkel bezieht, der von der automatischen Steuervorrichtung (70) vorgegeben wird.

**8.** Vorrichtung nach einem der vorstehenden Ansprüche,
**dadurch gekennzeichnet, dass** der Speicher (42) eine optimierte Serie von mittleren Verstellwinkeln während eines stationären Fluges speichert, und das Rechenmittel (40) dem Anzeigemittel (50) den Befehl gibt, ein viertes Symbol (54) auf dem Anzeigebildschirm (60) anzuzeigen, wobei das vierte Symbol (54) die optimierte Serie darstellt.

**9.** Vorrichtung nach einem der vorstehenden Ansprüche,
**dadurch gekennzeichnet, dass** das Rechenmittel (40) die Anzeige mindestens eines Symbols (54, 55, 56, 57) auf dem Anzeigebildschirm (60) befehlen kann, wobei jedes Symbol (54, 55, 56, 57) in einem Winkelsektor (51), der in Verstellwinkelgrade aufgeteilt ist, angeordnet ist.

**10.** Vorrichtung nach Anspruch 9,
**dadurch gekennzeichnet, dass** das Rechenmittel (40) die Anzeige des mittleren Ist-Verstellwinkels befiehlt, wobei das Anzeigemittel (50) den mittleren Ist-Verstellwinkel mittels eines Zeigers (52) anzeigt, der den Winkelsektor überstreichen kann, oder mittels des Zeigers (52) und einer digitalen Anzeige (53).

**11.** Hybridhelikopter (1) mit Drehflügeln (100), einem ersten und einem zweiten Halbflügel (8', 8"), die jeweils mit einem ersten bzw. einem zweiten Propeller (6', 6") versehen sind, und einer Antriebseinrichtung mit mindestens einem Turbomotor (5), der permanent die Drehflügel (100) und die Propeller (6', 6") zu einer Drehbewegung antreibt, indem ein mechanisches Verbindungssystem ineinandergreift,
**dadurch gekennzeichnet, dass** er eine Hilfsvorrichtung (20) zum Steuern nach einem der vorstehenden Ansprüche aufweist.

**12.** Hilfsverfahren zum Steuern eines Hybridhelikopters (1) nach Anspruch 11 mit Drehflügeln (100), einem ersten und einem zweiten Halbflügel (8', 8"), die jeweils mit einem ersten bzw. einem zweiten Propeller (6', 6") versehen sind, und einer Antriebseinrichtung (5'), die mindestens einem Turbomotor (5) aufweist, der ständig die Drehflügel (100) und die Propeller (6', 6") zu einer Drehbewegung antreibt, indem ein mechanisches Verbindungssystem ineinandergreift,
**dadurch gekennzeichnet, dass** auf einem Anzeigebildschirm (60) ein maximal auf den ersten und dem zweiten Propeller (6', 6") anwendbarer mittlerer Verstellwinkel, ohne die für die Propeller (6', 6") verfügbare Leistung zu überschreiten, angezeigt wird, der bestimmt wird in Abhängigkeit von dem mittleren Ist-Verstellwinkel der Blätter des ersten und des zweiten Propellers (6', 6"), der in Echtzeit gemessen wird, von einer maximalen Leistung, die von der Antriebseinrichtung geliefert werden kann, von der von dieser Antriebseinrichtung gelieferten Ist-Leistung und von einem Leistungsgradienten in Abhängigkeit von dem Verstellwinkel (GRD) des ersten und des zweiten Propellers (6', 6").

**13.** Verfahren nach Anspruch 12,
**dadurch gekennzeichnet, dass** der maximale mittlere Verstellwinkel dadurch bestimmt wird, dass während einer vorläufigen Phase folgende Schritte ausgeführt werden:

a) man zeichnet ein Bündel von Kurven (D1, D2, D3) in ein Diagramm ein, welches auf der Abszisse den Verstellwinkel ($\beta 0,75$) eines Blattes der Propeller in einem Abstand gleich 0,75 mal der Spannweite (R) dieses Blattes und auf der Ordinate den Leistungskoeffizienten (CP) des ersten und des zweiten Propellers (6', 6") darstellt, wobei jede Kurve (D1, D2, D3) bei einem Vortriebskoeffizienten ($\lambda$) erstellt ist, der sich ergibt in Abhängigkeit von dem Quotienten aus der tatsächlichen Luftgeschwindigkeit (VH) des Hybridhelikopters und der Geschwindigkeit (U) des freien Endes des Blattes, wobei die Geschwindigkeit (U) des freien Endes des Blattes gleich dem Produkt aus der Rotationsgeschwindigkeit ($\Omega$) eines Propellers und der Spannweite (R) des Blattes ist,

b) man bestimmt eine Zwischengleichung ausgehend von dem Kurvenbündel, welches den Leistungskoeffizienten (CP) in Abhängigkeit von dem Verstellwinkel ($\beta 0,75$) eines Blattes der Propeller in einem Abstand gleich 0,75 mal der Spannweite (R) dieses Blattes und von dem Vortriebskoeffizienten ($\lambda$) angibt, wobei man anschließend eine erste Gleichung bestimmt, die einen Leistungsgradienten in Abhängigkeit von dem Verstellwinkel (GRD) in Abhängigkeit von der teilweisen Abweichung der Zwischengleichung von dem Verstellwinkel angibt, das heißt:

$$\mathrm{GRD} = 0,5 \text{ x } \rho \text{ x } \pi \text{ x } R^2 \text{ x } U^3 \text{ x } \frac{\partial CP}{\partial \beta}(\beta 0,75, \lambda),$$

**EP 2 258 615 B1**

worin p die Luftdichte und U die Geschwindigkeit des freien Endes des Blattes ist,
und wobei man folgende Schritte in Echtzeit während des Fluges ausführt:

c) man bestimmt den Leistungsgradienten in Abhängigkeit von dem Verstellwinkel (GRD) mittels der ersten Gleichung, indem man die erste Gleichung berechnet mit Werten des mittleren Ist-Verstellwinkels, der Ist-Luftdichte, der Ist-Geschwindigkeit der freien Enden des Blattes und mit dem Ist-Vortriebskoeffizienten,

d) man bestimmt den maximalen mittleren Verstellwinkel (βmax) mittels der folgenden ersten Beziehung:

$$\beta max = \beta actuel + [(P1*(\Omega/\Omega'))-P2]/GRD,$$

wobei "/" das Divisionszeichen darstellt,
"*" das Multiplikationszeichen darstellt,
"βmax" den maximalen mittleren Verstellwinkel darstellt, "βactuel" den in Echtzeit gemessenen mittleren Ist-Verstellwinkel darstellt,
"P1" die maximale von der Antriebseinrichtung lieferbare Leistung darstellt,
"P2" die von der Antriebseinrichtung gelieferte Ist-Leistung darstellt,
"Ω" die Drehgeschwindigkeit des ersten und des zweiten Propellers darstellt,
"Ω'" einen Sollwert der Drehgeschwindigkeit des ersten und des zweiten Propellers darstellt und
"GRD" den Leistungsgradienten in Abhängigkeit von dem Verstellwinkel darstellt.

14. Verfahren nach einem der Ansprüche 12 oder 13,
**dadurch gekennzeichnet, dass** man einen mittleren Verstellwinkel bei Autorotation (β0) bestimmt und auf dem Anzeigebildschirm (60) anzeigt in Abhängigkeit von der tatsächlichen Luftgeschwindigkeit (VH) des Hybridhelikopters (1) und von der Drehgeschwindigkeit (Ω) der Propeller (6', 6") mittels der folgenden zweiten Beziehung:

$$\beta0 = \alpha0 + arctg [VH / (\Omega*0,75*R)],$$

wobei "/" das Divisionszeichen darstellt,
"*" das Multiplikationszeichen darstellt,
"arctg" die trigonometrische Funktion Arcustangens darstellt, "β0" den mittleren Verstellwinkel bei Autorotation darstellt, "α0" den Neigungswinkel eines Blattes eines Propellers, der einen Vortrieb 0 dieses Blattes erzeugt, darstellt,
"VH" die tatsächliche Luftgeschwindigkeit des Hybridhelikopters darstellt,
"Ω" die Drehgeschwindigkeit der Propeller darstellt, und
"R" die Spannweite des Blattes darstellt.

15. Verfahren nach einem der Ansprüche 10 bis 14,
**dadurch gekennzeichnet, dass** auf einem Anzeigebildschirm (60) ein Sollwert angezeigt wird, der vorgegeben wird durch eine automatische Steuerungsvorrichtung (70).

**Claims**

1. Piloting assistance device for a hybrid helicopter provided with a rotary wing (100), first and second half-wings (8', 8") provided respectively with first and second propellers (6', 6"), and an engine installation (5') having at least one turbine engine (5) continuously driving in rotation said rotary wing (100) and said propellers (6', 6") by engaging with a mechanical interconnection system,
**characterized in that** said piloting assistance device (20) is suitable for receiving first and second power values from a regulator member (34) of said engine installation (5'), said first and second power values relating respectively to a maximum power (P1) capable of being delivered by said engine installation (5') and to a power currently being delivered (P2) by said engine installation (5'), said piloting assistance device (20) comprising;

- a mean pitch sensor (37) suitable for measuring a current mean pitch of the blades of the first and second propellers (6', 6") in real time;
- an air speed sensor (31) suitable for measuring the true air speed of the hybrid helicopter;

18

- a speed of rotation sensor (32) suitable for measuring the speed of rotation of the propellers of the hybrid helicopter;
- a density sensor (35) suitable for measuring the density of the air;
- computer means (40) provided with a memory (42) containing a first equation determining a power gradient as a function of pitch (GRD) for said first and second propellers (6', 6"), the computer means (40) being connected to the mean pitch sensor (37), to the air speed sensor (31), to the speed of rotation sensor (32), and to the air density sensor (35), and being suitable for receiving said first and second power values to determine a maximum mean pitch (βmax) applicable to said first and second propellers (6', 6") without exceeding the power available for said propellers (6', 6"), said computer means (40) determining said maximum mean pitch (βmax) as a function of said current mean pitch (βcurrent), of said first and second power values, and of said power gradient as a function of pitch; and
- display means (50) suitable for presenting said maximum mean pitch (βmax) on a display screen (60).

2.   Device according to claim 1,
     **characterized in that** said computer means (40) control said display means (50) to present a first symbol (55) on a display screen (60), the first symbol representing said maximum mean pitch (βmax).

3.   Device according to claim 2,
     **characterized in that** said first power value contains a first maximum power suitable for being delivered by said engine installation at a first speed of operation (PMC), and a second maximum power suitable for being delivered by said engine installation at a second speed of operation (PMD), said computer means (40) determining a first maximum mean pitch for the first speed of operation (PMC) and a second maximum mean pitch for the second speed of operation (PMD), and said computer means (40) controls said display means (50) to present on a display screen (60) a first primary symbol (55') representing said first maximum mean pitch and a first secondary symbol (55") representing said second maximum mean pitch.

4.   Device according to any one of the preceding claims,
     **characterized in that** the device includes an air speed sensor (31) suitable for measuring and delivering a first speed value relating to the true air speed (VH) of said hybrid helicopter (1) to said computer means (40), and a speed of rotation sensor (32) suitable for measuring and delivering a second speed value relating to the speed of rotation (Q) of said propellers (6', 6") to said computer means (40), said computer means (40) determining an autorotation mean pitch (β0) generating zero thrust for the first and second propellers (6', 6") as a function of the first and second speed values.

5.   Device according to claim 4,
     **characterized in that** said computer means (40) control said display means (50) to display on a display screen (60) a second symbol (56) representing said autorotation mean pitch (β0).

6.   Device according to claim 5,
     **characterized in that** said computer means (40) control said display means (50) to present on a display screen (60) a second symbol (56) representing said autorotation mean pitch (β0) :

     - if said autorotation mean pitch (β0) is greater than 5 degrees; and
     - if the measured true air speed (VH) is greater than 20 metres per second.

7.   Device according to any one of the preceding claims,
     **characterized in that** said piloting assistance device (20) is suitable for being connected to an autopilot device (70) of said hybrid helicopter (1), the computer means (40) being suitable for controlling the display means (50) to present a third symbol (57) on said display screen (60), said third symbol (57) relating to a pitch setpoint given by said autopilot device (70).

8.   Device according to any one of the preceding claims,
     **characterized in that** said memory (42) stores an optimized mean pitch range for hovering flight, said computer means (40) controlling the display means (50) to present a fourth symbol (54) on said display screen (60), said fourth symbol (54) representing said optimized range.

9.   Device according to any one of the preceding claims,
     **characterized in that** said computer means (40) are suitable for causing at least one symbol (54, 55, 56, 57) to be displayed on said display screen (60), each symbol (54, 55, 56, 57) being positioned on an angular sector (51) that is graduated in pitch degrees.

10. Device according to Claim 9,
**characterized in that** the computer means (40) cause said current mean pitch to be displayed, the display means (50) presenting the current mean pitch via a pointer (52) suitable for sweeping said angular sector or via said pointer (52) and a digital display (53).

11. Hybrid helicopter (1) provided with a rotary wing (100), first and second half-wings (8', 8") provided respectively with first and second propellers (6', 6"), and an engine installation having at least one turbine engine (5) continuously driving in rotation said rotary wing (100) and said propellers (6', 6") by engaging with a mechanical interconnection system,
**characterized in that** the helicopter includes a piloting assistance device (20) according to any one of the preceding claims.

12. Method of assisting the piloting of a hybrid helicopter (1) according to claim 11 that is provided with a rotary wing (100), first and second half-wings (8', 8") provided respectively with first and second propellers (6', 6"), and an engine installation (5') having at least one turbine engine (5) continuously driving in rotation said rotary wing (100) and said propellers (6', 6") by engaging with a mechanical interconnection system,
**characterized in that** there is displayed on a display screen (60) a maximum mean pitch applicable to said first and second propellers (6', 6") without exceeding the power available for said propellers (6', 6") determined as a function of the current mean pitch of the blades of the first and second propellers (6', 6") measured in real time, of a maximum power that can be delivered by said engine installation, of a current power being delivered by said engine installation, and of a power gradient as a function of pitch (GRD) for said first and second propellers (6', 6").

13. Method according to claim 12,
**characterized in that** said maximum mean pitch is determined by performing the following steps during a preliminary stage:

- a) plotting a family of curves (D1, D2, D3) on a diagram presenting, along the abscissa, the pitch ($\beta 0.75$) of a blade of said propellers at a distance equal to 0.75 times the span (R) of said blade and, along the ordinate, the power coefficient (CP) of the first and second propellers (6', 6"), each curve (D1, D2, D3) being established at a given advance coefficient ($\lambda$) as a function of the quotient of the true air speed (VH) of the hybrid helicopter and the speed (U) of the free end of the blade, said speed (U) of the free end of the blade being equal to the product of the speed of rotation ($\Omega$) of a propeller and the span (R) of said blade;
- b) determining an intermediate equation from said family of curves giving said power coefficient (CP) as a function of said pitch ($\beta 0.75$) of a blade of said propellers at a distance equal to 0.75 times the span (R) of said blade and of said advance coefficient ($\lambda$), and then determining a first equation giving a power gradient as a function of pitch (GRD) as a function of the partial derivative of said intermediate equation relative to pitch, i.e.:

$$\text{GRD} = 0.5 \times \rho \times \pi \times R^2 \times U^3 \times \frac{\partial CP}{\partial \beta}(\beta 0.75, \lambda)$$

where $\rho$ is the density of the air and U is the speed of the free end of the blade;
and then implementing the following steps in real time in flight:
- c) determining a power gradient as a function of pitch (GRD) using said first equation by calculating said first equation using the values for the current mean pitch, the current air density, the current speed of the free end of the blade, and the current advance coefficient; and
- d) determining said maximum mean pitch ($\beta$max) using the following first relationship:

$$\beta max = \beta current + [(P1*(\Omega/\Omega')) - P2]/GRD$$

where:
"/" represents the division sign;

"*" represents the multiplication sign;

"βmax" represents the maximum mean pitch;

"βcurrent" represents the current mean pitch measured in real time;

"P1" represents the maximum power that can be delivered by the engine installation;

"P2" represents the current power being delivered by the engine installation;

"Q" represents the speed of rotation of said first and second propellers;

"Q'" represents a setpoint for the speed of rotation of said first and second propellers; and

"GRD" represents said power gradient as a function of pitch.

14. Method according to any one of claims 12 to 13,
**characterized in that** there is determined and displayed on said display screen (60) an autorotation mean pitch (β0) as a function of the true air speed (VH) of said hybrid helicopter (1) and of the speed of rotation (Q) of said propellers (6', 6") using the following second relationship:

$$\beta 0 = \alpha 0 + \arctan\ [VH/(\Omega*0.75*R)]$$

where:

"/" represents the division sign;

"*" represents the multiplication sign;

"arctan" represents the arctangent trigonometric function;

"β0" represents the autorotation mean pitch;

"α0" represents the angle of incidence of a blade of a propeller that would generate zero lift by said blade;

"VH" represents the true air speed of the hybrid helicopter;

"Q" represents the speed of rotation of said propellers; and

"R" represents the span of said blade.

15. Method according to any one of claims 10 to 14,
**characterized in that** a setpoint given by an autopilot device (70) is displayed on a display screen (60).

Fig.1

Fig.2

Fig.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2916418
- US 5050081 A
- EP 1471334 A
- FR 2756256
- US 4514142 A
- FR 2916421